# EUROPEAN PATENT APPLICATION

(11) **EP 4 378 299 A1**
(43) Date of publication of application: **05.06.2024**
(21) Application number: 23208242.0
(22) Date of filing: 07.11.2023
(51) Int. Cl.: A01F 12/24, A01F 12/26, A01F 12/28

(54) **A GRAIN SEPARATING SYSTEM FOR A COMBINE HARVESTER**

(30) Priority: 11.11.2022 GB 202216829
(71) Applicant: AGCO International GmbH, 8212 Neuhausen am Rheinfall (CH)
(72) Inventor: Anderson, Andreas, 8930 Randers (DK)
(74) Representative: AGCO Intellectual Property Department

(57) **Abstract**

A grain separating system is provided with a rotary threshing cylinder and separating cylinder, each with an associated concave grate. The separating grate comprises a finger grate comprising fingers which extend in a flow direction of the crop material.

## Description

### FIELD

Embodiments of the present disclosure relate generally to combine harvesters, and in particular to the grain separating system used within a combine harvester.

### BACKGROUND

A combine harvester typically includes a threshing system for detaching grains of cereal from the ears of cereal and performing a first separation , a main separating apparatus downstream of the threshing system, and a grain cleaning apparatus for receiving grain from the separating apparatus. The grain is collected in a grain tank, and from the grain tank the grain can be unloaded by a grain unloading system, for example to a trailer pulled by a tractor which runs alongside the combine harvester.

The initial threshing (and separating) creates a flow of grain to a stratification pan of the separating apparatus. The separating function further downstream of the threshing system serves to separate further grain from the crop stream and this separated grain passes through a grate-like structure. In some designs there is also a return pan beneath the separator grate.. The stratification pan (and return pan if present) are driven in an oscillating manner to convey the grain and MOG accordingly.

The crop stream collected by the stratification pan and return pan typically includes a proportion of straw, chaff, tailings and other unwanted material such as weed seeds, bugs, and tree twigs. The grain cleaning apparatus removes this unwanted material thus leaving a clean sample of grain to be delivered to the tank. A grain cleaning unit for example comprises a fan unit and sieves, the main sieve being known as the chaffer.

The sieves are also driven with an oscillatory movement to transport the grain towards the grain tank. In particular, there is a fore/aft motion with a vertical component.

The threshing system performs a first part of the separating function.

One type of threshing (an axial or axial flow threshing system) makes use of one or more cylinders each with an auger to drive material in an axial direction (parallel to the cylinder axis). The material may be fed to the auger axially or tangentially. The (or each) cylinder is mounted over a concave grate. The grate for example comprises a finger grate, and the material is advanced across the fingers of the finger grate as the material advances in the axial direction.

Another type of threshing (a tangential flow threshing system or "conventional" threshing system) makes use of a cylinder with paddles that rub the crop flow over a concave grate in a tangential direction. Such a rotary threshing system for example comprises a threshing cylinder and a separating cylinder, each mounted over a respective concave grate. The concave grates typically comprise a wire mesh in the form of a square or rectangular grid of mesh openings formed by orthogonal bars and wires, known as a bar and wire grid.

In a so-called conventional combine harvester, this type of tangential flow threshing system is combined with a straw walker system. In a so-called hybrid combine harvester, this type of tangential flow threshing system is combined with an axial flow separating system downstream of the threshing system.

EP 2 327 290 discloses a conventional (tangential flow) threshing and separating system. The threshing system has a concave which defines a first threshing section, a second threshing section and a third threshing section. The first and second threshing sections have threshing bars across the flow direction as well as a grid with basket wires in the tangential direction. The third threshing section has an arrangement of fingers.

US 2020/0196530 discloses an axial flow threshing and separating system. There are fixed grates at the entrance end, and adjustable grates at the exit end. The adjustable grates comprise lines of fingers which open or close the space to the rotor, for different crop conditions.

The bar and wire concave grate typically used in the separating section of a conventional combine is however rough on the straw and can cause chaff to reach the grain cleaning apparatus and can cause broken grain. There is therefore a need to improve the separating function of a rotary threshing system, particularly in a conventional combine harvester configuration.

### BRIEF SUMMARY

The invention is defined by the claims.

According to examples in accordance with the invention, there is provided a grain separating system for a combine harvester for separating grain from a crop stream with the crop stream advancing through the grain separating system in a flow direction, comprising:
a threshing cylinder;
a threshing grate positioned beneath the threshing cylinder;
a separating cylinder; and
a separating grate positioned beneath the separating cylinder, wherein the threshing grate and the separating grate are for delivering threshed grain from the crop stream;
wherein the threshing cylinder and the separating cylinder have an axis of rotation perpendicular to the flow direction and comprise paddles for generating a tangential flow,
and wherein the separating grate comprises a finger grate comprising fingers which extend in the flow direction.

This grain separating system uses a finger grate beneath a separating cylinder so that the material is dragged by paddles (or other protrusions) along the length direction of the fingers of the finger grate rather than being dragged across the fingers as in the conventional application of a finger grate (when used in an axial flow configuration). In the axial flow configuration, the material flow is for example over the fingers of the finger grate with an angle in a range 15 to 30 degrees, whereas the flow is aligned with the length axis of the fingers in the configuration of this disclosure. This enables the straw quality to be increased. The material flow direction is in the fore-aft direction of the combine harvester. By dragging material along the fingers, the separating function is less rough on the straw and grain so that the straw flow is less destroyed while maintaining an efficient separation. The amount of broken grain is also decreased. The separating cylinder and grate are downstream of the threshing cylinder and grate (with respect to the material flow direction).

The grain separating system may further comprise:
a beater cylinder between the threshing cylinder and the separating cylinder; and
a beater grate positioned beneath the beater cylinder, wherein the beater cylinder has an axis of rotation perpendicular to the flow direction for generating a tangential flow.

Thus, in this example, the separating (and threshing) system has a set of three cylinders and associated grates.

The fingers may be pivotable, such that a spacing between trailing ends of the fingers and the separating cylinder is adjustable.

By pivoting the fingers, the separator grate can be adjusted from a less aggressive configuration to a more aggressive configuration. For example, this may be useful when changing crop type, for example when the combine harvester is changing from wheat to corn. An electrical actuator or hydraulic actuator is for example used to control the pivoting of the fingers. This avoids the need to change manually the grate for different crop types or crop conditions. This manual grate changing is a time consuming and heavy job.

The pivotable control also enables on-the-go real time adjustment. For example, if process loss sensors detect high losses (e.g. at a higher moisture crop patch or a premature crop) the finger grate can be adjusted (even automatically) to a more aggressive position to enhance separation in this area. A less aggressive position may be used if a good straw quality is preferred (e.g. compared to a high yield).

The finger grate for example comprises a set of rows of fingers, the rows extending perpendicularly to the flow direction, wherein the fingers of each row are connected together at a leading end and are separate at a trailing end, wherein a rotation of the separating cylinder is in the direction from the leading end to the trailing end.

Thus, the crop flow is driven over the grate with movement from the connected ends of the fingers (e.g. connected by a cross bar) towards the free end of the fingers.

Each row of fingers may then be pivotable as a single unit.

The invention also provides a grain processing system, comprising:
the grain separating system defined above; and
a straw walker system for receiving the remaining material of the crop stream from the grain separating system.

The grain processing system preferably also comprises a grain cleaning system downstream of the grain separating system.

The grain cleaning system for example comprises:
a grain pan or sieve;
a return pan;
a stratification pan for receiving the harvested crop material from a front end of the return pan;
a fan; and
a sieve arrangement for receiving the harvested crop material from a rear end of the stratification pan.

The sieve arrangement for example comprises:
a chaffer sieve for conveying harvested crop material in a generally rearward direction; and
a lower sieve,
wherein the grain cleaning system comprises a clean grain chute below the lower sieve.

The invention also provides a combine harvester comprising:
a crop cutting head; and
the grain processing system defined above.

When the fingers of the finger grate are pivotable, the combine harvester may further comprise:
a loss sensor for sensing crop loss; and
a controller for controlling the pivoting of the fingers in dependence on the crop loss.

This enables automatic control of the separating function based on the sensing of crop conditions.

Within the scope of this application it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

One or more embodiments of the invention / disclosure will now be described, by way of example only, with reference to the accompanying drawings, in which:
Figure 1 shows a combine harvester which may be adapted in accordance with the invention;
Figure 2 shows one example of threshing system and grain cleaning apparatus in more detail;
Figure 3 shows an example of a separator cylinder and grate a sieve of the grain cleaning system and shows how it is desired to move the sieve with an oscillatory movement;
Figure 4 shows the separating cylinder and separating grate in perspective view;
Figures 5 and 6 show the separating grate in perspective view;
Figure 7 shows a first configuration of an adjustable separating grate with a maximum spacing;
Figure 8 shows a second configuration with an intermediate spacing; and
Figure 9 shows a third configuration with a minimum spacing.

### DETAILED DESCRIPTION

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

This disclosure relates to the grain separating apparatus of a combine harvester, and in particular relates to the separating cylinder and grate downstream of a threshing cylinder and grate. The grain separating apparatus is provided with a tangential flow threshing cylinder and separating cylinder, each with an associated concave grate. The separating grate comprises a finger grate having fingers which extend in a flow direction of the crop material.

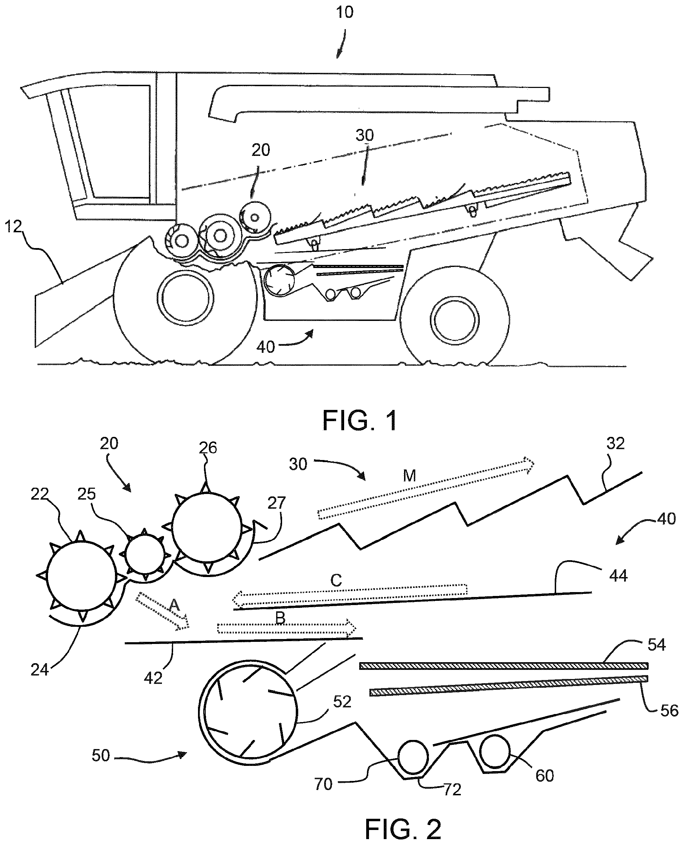

Figure 1 shows a known combine harvester 10 to which the invention may be applied. The combine harvester includes a threshing system 20 for detaching grains of cereal from the ears of cereal, and a separating apparatus 30 which is connected downstream of the threshing unit 20. The threshing system comprises one or more threshing units, in particular rotors, and associated concaves. The separating apparatus 30 includes a plurality of parallel, longitudinally-aligned, straw walkers 32, and this results in a so-called straw-walker combine. The grains after separation by the separating device 30 pass to a grain cleaning apparatus 40.

The combine harvester has a front elevator housing 12 at the front of the machine for attachment of a crop cutting head (known as the header, not shown). The header when attached serves to cut and collect the crop material as it progresses across the field, the collected crop stream being conveyed up through the elevator housing 12 into the threshing unit 20.

The threshing system 20 is a tangential-flow 'conventional' threshing system, i.e. formed by rotating elements with an axis of rotation in the side-to-side direction of the combine harvester and for generating a tangential flow. For example, the 'conventional' threshing system includes a rotating, tangential-flow, threshing cylinder and a concave-shaped grate. The threshing cylinder includes paddles (not shown, also known as rasp bars) which act upon the crop stream to thresh the grain or seeds from the remaining material, the majority of the threshed grain passing through the underlying grate and onto a stratification pan (also sometimes known as the grain pan).

There are also axial threshing systems, i.e. formed by rotating elements with an axis of rotation in the longitudinal direction (direction of travel). For example, the threshing section may have axially-aligned rasp bars spaced around the front section whilst the separating section has separating elements or fingers arranged in a pattern, e.g. a spiral pattern, extending from the rasp bars to the rear of the rotor.

In one example, the teaching of this disclosure may be applied to the so-called conventional combine harvester, with a tangential flow threshing (and separating) unit 20 and a straw walker separating device 30. These are shown in Figure 2 in more detail, together with a cleaning apparatus 40.

Figure 2 shows one particular design of the threshing unit. The threshing unit 20 includes a rotor 22 (threshing cylinder) below which is mounted a threshing grate 24 (a concave-shaped grate). The threshing cylinder 22 includes rasp bars (not shown) which act upon the crop stream to thresh the grain or seeds from the remaining material, the majority of the threshed grain passing through the underlying concave 24 and onto a stratification pan 42 (also known as the grain pan), which may be considered to be part of the grain cleaning apparatus 40.

The threshing unit 20 also comprises a beater cylinder 25 (also with a transverse rotation axis and creating a tangential flow), downstream of the threshing cylinder and a tangential-flow multi-crop separator cylinder 26 (also with a lateral rotation axis and creating a tangential flow) downstream of the beater cylinder 25. The separator cylinder has a separator grate 27. Of course, the three grates may be formed as a single unit.

The remainder of the crop material including straw, tailings and un-threshed grain are passed from the threshing unit 20 into the separating apparatus 30 as shown by arrow M.

The separating apparatus 30 includes a plurality of parallel, longitudinally-aligned, straw walkers 32. The separating apparatus 30 serves to separate further grain from the crop stream, and this separated grain passes through a grate-like structure onto an underlying return pan 44. The residue crop material, predominantly made up of straw, exits the machine at the rear. Although not shown in Figure 1, a straw spreader and/or chopper may be provided to process the straw material as required.

The threshing apparatus 20 and separating apparatus 30 do not remove all material other than grain, "MOG", from the grain so that the crop stream collected by the stratification pan 42 and return pan 44 typically includes a proportion of straw, chaff, tailings and other unwanted material such as weed seeds, bugs, and tree twigs. The remainder of the grain cleaning apparatus 40 (i.e. a grain cleaning unit 50) is provided to remove this unwanted material thus leaving a clean sample of grain to be delivered to the tank.

The grain cleaning unit 50 also comprises a fan unit 52 and sieves 54 and 56. The upper sieve 54 is known as the chaffer.

The stratification pan 42 and return pan 44 are driven in an oscillating manner to convey the grain and MOG accordingly. Although the drive and mounting mechanisms for the stratification pan 42 and return pan 44 are not shown, it should be appreciated that this aspect is well known in the art of combine harvesters and is not critical to disclosure of the invention. Furthermore, it should be appreciated that the two pans 42, 44 may take a ridged construction as is known in the art.

The grain passing through concave grate 24 falls onto the front of the stratification pan 42 as indicated by arrow A in Figure 2. This material is conveyed rearwardly (in the direction of arrow B in Figure 2) by the oscillating motion of the stratification pan 42 and the ridged construction thereof. Material passing through the grate of the separator apparatus 30 falls onto the return pan 44 and is conveyed forwardly by the oscillating motion and ridged construction thereof as shown by arrow C.

It is noted that "forwardly" and "rearwardly" refer to direction relative to the normal forward direction of travel of the combine harvester.

When the material reaches a front edge of the return pan 44 it falls onto the stratification pan 42 and on top of the material conveyed from the threshing unit 20 as indicated by arrow B.

The combined crop streams thus progress rearwardly towards a rear edge of the stratification pan 42. Whilst conveyed across the stratification pan 42, the crop stream, including grain and MOG, undergoes stratification wherein the heavier grain sinks to the bottom layers adjacent stratification pan 42 and the lighter and/or larger MOG rises to the top layers.

Upon reaching the rear edge of the stratification pan 42, the crop stream falls onto the chaffer 54 which is also driven in a fore-and-aft oscillating motion. The chaffer 54 is of a known construction and includes a series of transverse ribs or louvers which create open channels or gaps therebetween. The chaffer ribs are angled upwardly and rearwardly so as to encourage MOG rearwardly whilst allowing the heavier grain to pass through the chaffer onto an underlying second sieve 56.

The chaffer 54 is coarser (with larger holes) than second sieve 56. Grain passing through chaffer 54 is incident on the lower sieve 56 which is also driven in an oscillating manner and serves to remove tailings from the stream of grain before being conveyed to on-board tank (not shown) by grain collecting auger 70 which resides in a transverse trough 72 at the bottom of the grain cleaning unit 50. Tailings blocked by sieve 56 are conveyed rearwardly by the oscillating motion thereof to a rear edge from where the tailings are directed to the returns auger 60 for reprocessing in a known manner. The grain collecting auger 70 delivers the grain to a grain tank, and a grain unloading system enables the grain to be removed from the grain tank.

The invention relates in particular to the separator grate 27 of the grain separating system.

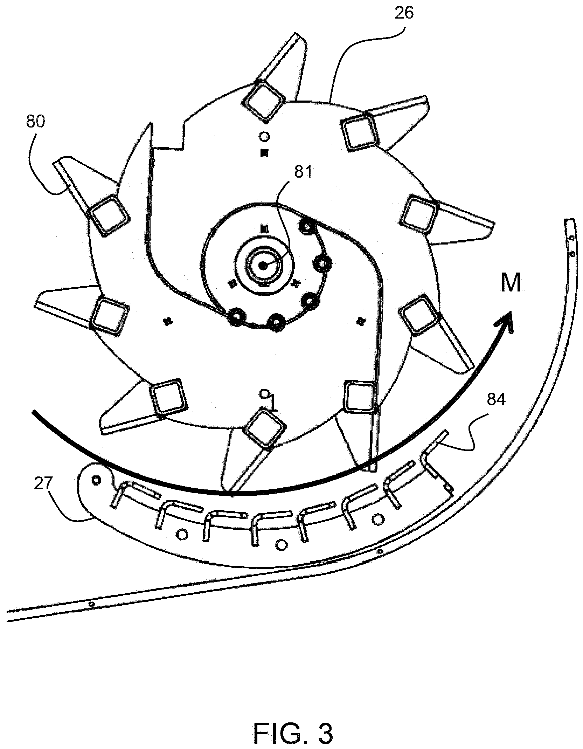

Figure 3 shows an example of the separating cylinder 26 and its associated concave grate 27 in accordance with this disclosure.

The cylinder 26 has an arrangement of paddles 80 which push the crop material around the inside of the concave grate 27. The paddles drive the crop material in a flow direction perpendicular to the axis 81 of rotation of the cylinder. The flow direction is generally in the fore-aft direction of the combine harvester, i.e. the direction of travel of the combine harvester. The flow direction is locally in a tangential direction of the cylinder, i.e. perpendicular to the cylinder axis 81, as the material travels along the space between the cylinder 26 and the grate 27.

The separating grate 27 is positioned beneath the separating cylinder, and the surface of the concave grate 27 facing the separating cylinder has fingers 84 so that it forms a finger grate. The fingers extend in the flow direction.

What is meant by this is that the fingers extend in a direction with no lateral direction component, namely perpendicular to the cylinder axis of rotation 81. The fingers are not all parallel because they are formed on a curved surface - they are parallel with the local tangential direction of the cylinder, which is the local flow direction of material around the space between the cylinder and the grate as explained above. Thus, each finger extends in a direction with a fore-aft component (parallel to the direction of motion of the combine harvester), no lateral component, and a vertical component which depends on the position around the general curvature of the concave. This is what is meant by "in the flow direction".

The flow of material is along the length direction of the fingers 84 of grate 27 rather than across the fingers as in conventional application of a finger grate. By dragging material along the fingers, the separating function is less rough on the straw and grain so that the straw flow is less destroyed while maintaining an efficient separation. The amount of broken grain is also decreased.

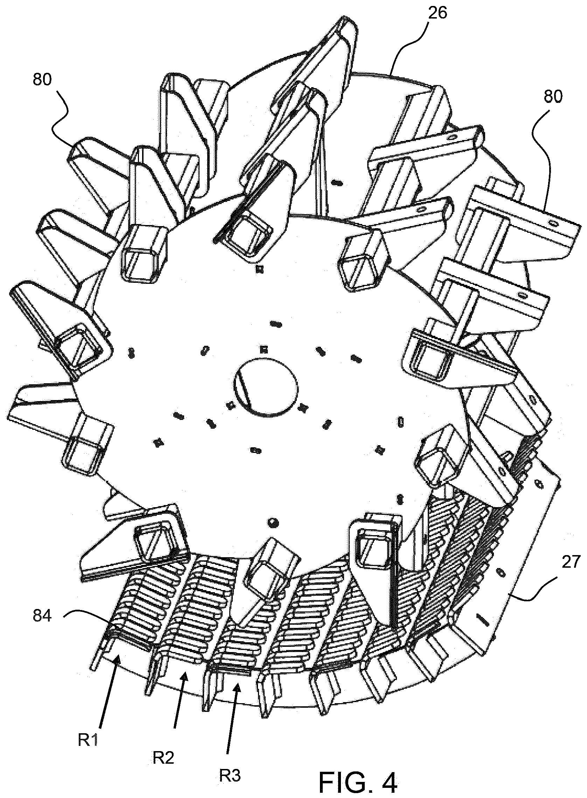

Figure 4 shows the separating cylinder 26 and separating grate 27 in perspective view. The fingers 84 are arranged in row R1, R2, R3, etc. The rows are parallel to the cylinder axis of rotation i.e. perpendicular to the flow direction. The fingers 84 of each row are connected together at a leading end and separate at a trailing end, wherein a rotation of the separating cylinder is in the direction from the leading end to the trailing end. Thus, material is dragged along the fingers from the connected ends towards the free ends.

The spacing between fingers will be selected depending on the crop type. By way of example the spacing between fingers may be in the range 5mm to 25 mm and the length of the fingers may be in the range 10 mm to 100 mm. The number of rows of fingers will depend on the concave wrap angle, for example there may be between 5 and 20 rows. The length of the cylinder (i.e. the combine width direction) is for example in the range 1200 mm to 1700 mm.

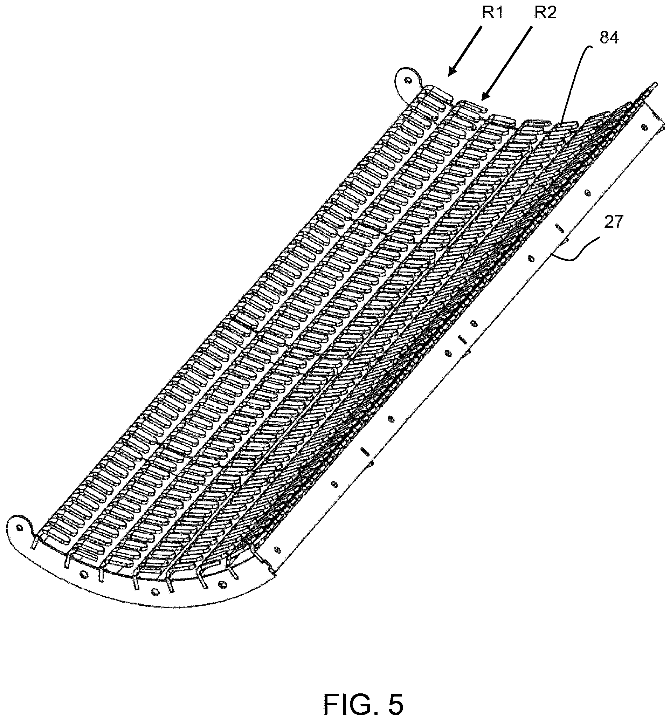

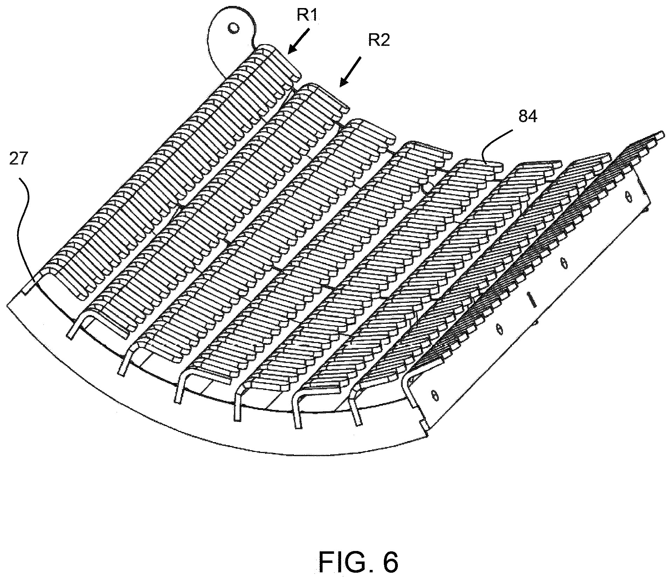

Figures 5 and 6 show the separating grate 27 in perspective view.

The spacing between the separating cylinder and the separating grate defines the harshness of the threshing and separating function achieved. To enable an adjustable separation function, the fingers may be pivotable, such that a spacing between the trailing ends of the fingers and the separating cylinder is adjustable.

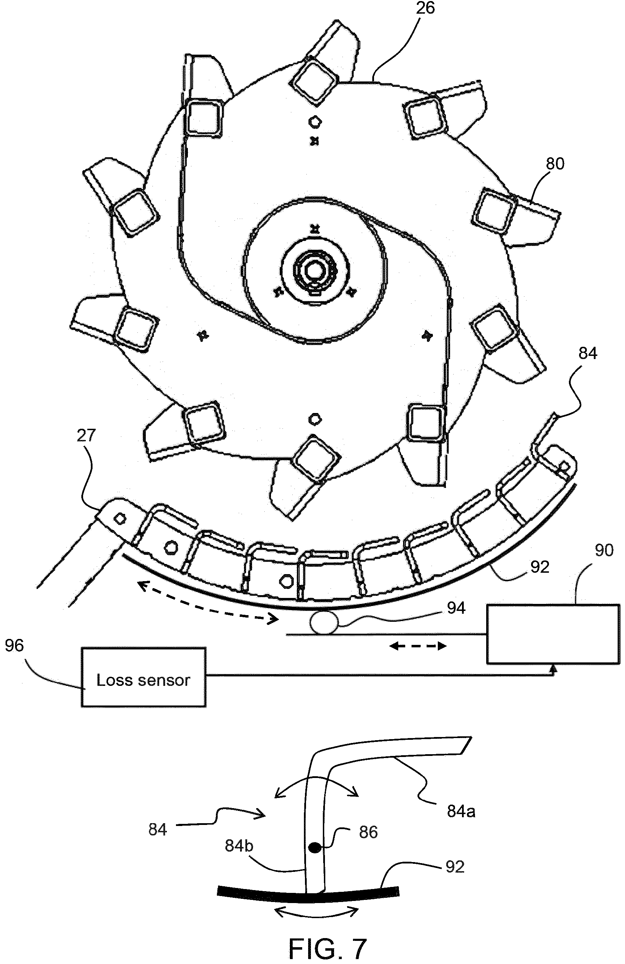

Figure 7 shows a first configuration with a maximum spacing. The fingers are locally parallel to the adjacent circular shape of the cylinder. This is the least aggressive position. It results in a highest possible straw quality and is suitable for easy crops and dry conditions. It is also a low power consumption mode.

Figure 7 shows an enlarged view of one finger. It shows that each finger 84 has a finger portion 84a on one side of a finger pivot 86 and a drive portion 84b on the opposite side of the finger pivot.

An actuator 90 is provided, which is coupled to the drive portions 84b of the fingers. For example, a coupling frame 92 couples the drive portions together to form a single structure which can be actuated by a single actuator.

As the fingers are connected as solid rows, only one connection is needed between the coupling frame and each the row of fingers; a coupling is not needed to each finger individually. For example, each row of fingers may have a single extended drive portion which connects to the coupling frame.

The coupling frame is for example driven in a rotary manner, with gearing 94 between a linear output of the actuator 90 and the coupling frame 92. The actuator is for example a hydraulic piston, although an electrical or manual mechanical actuation is also possible. For a manual mechanical system, the adjustment would be made from the side of the combine chassis. The adjustment is made to all fingers at once, so that the profile of the entire surface of the finger grate is changed.

Figure 7 also shows a loss sensor, discussed further below, which may be used to derive a control input to the actuator.

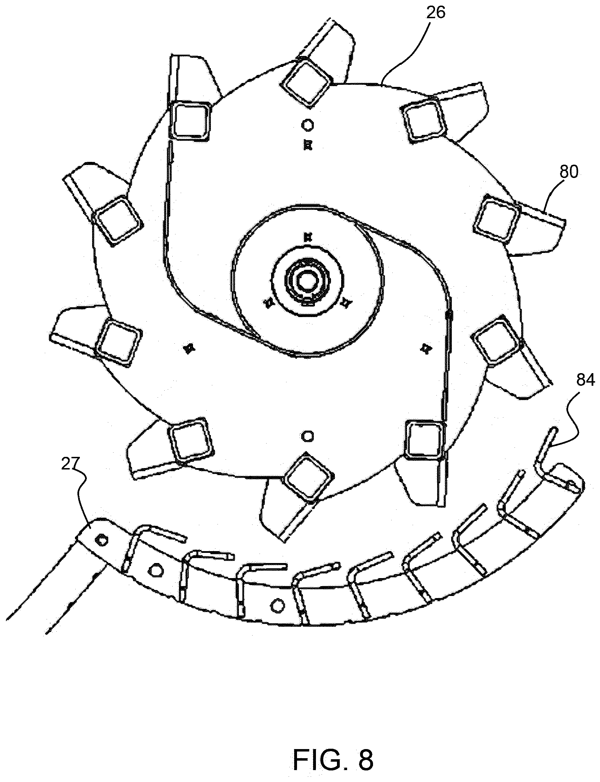

Figure 8 shows a second configuration with an intermediate spacing. The fingers are rotated so they are no longer parallel to the adjacent circular shape of the cylinder. Instead, the trailing ends are lifted. This is an intermediate position with regard to the level of aggression. It results in a reduced straw quality and is suitable for tougher threshing such as high moisture crops or premature cereals and is needed to prevent losses. It is also a higher power consumption mode.

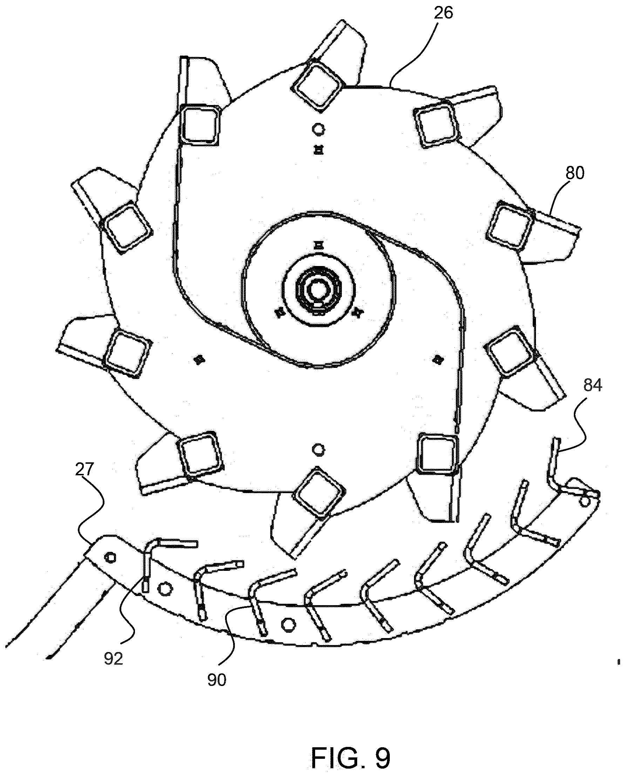

Figure 9 shows a third configuration with a minimum spacing. The fingers are rotated further so they are even further offset from the parallel direction (parallel to the adjacent circular shape of the cylinder). The trailing ends are further lifted. This is a most aggressive position. It results in the lowest straw quality and is suitable for even tougher threshing, but also enables a same design of the separating grate to be used for different crops, such as large grain e.g. corn and beans. It results in the highest power consumption.

The adjustability is for example used to change crop type, for example when the combine harvester is changing from wheat to corn. The adjustment can avoid the need to change manually the grate for different crop types or crop conditions. This manual grate changing is a time consuming and heavy job.

The pivotable control also enables real time adjustment. For example, if process loss sensors detect high losses (e.g. at a higher moisture crop patch or a premature crop) the finger grate can be adjusted automatically to a more aggressive position to enhance separation in this area.

The combine harvester which incorporates this grain cleaning system then has the loss sensor 96 shown in Figure 7 for sensing crop loss, and a controller is provided for controlling the pivoting of the fingers in dependence on the crop loss.

The finger grate is described above in connection with a straw walker machine, with a straw walker downstream of the threshing and separating rollers. However, the invention may be applied to any combine in which there is a threshing/separating section using cylinders and concaves having a tangential flow ("conventional") configuration. For example, a hybrid machine may have a tangential flow threshing/separating section as described above, and an axial flow auger type separator downstream of the threshing/separating section.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to".

Any reference signs in the claims should not be construed as limiting the scope.

## Claims

1. A grain separating system for a combine harvester for separating grain from a crop stream with the crop stream advancing through the grain separating system in a flow direction, comprising:
a threshing cylinder (22);
a threshing grate (24) positioned beneath the threshing cylinder;
a separating cylinder (26); and
a separating grate (27) positioned beneath the separating cylinder, wherein the threshing grate and the separating grate are for delivering threshed grain from the crop stream; and
wherein the threshing cylinder (22) and the separating cylinder (26) have an axis (81) of rotation perpendicular to the flow direction (M) and comprise paddles (80) for generating a tangential flow,
and wherein the separating grate comprises a finger grate comprising fingers (84) which extend in the flow direction (M).

2. The grain separating system of claim 1, further comprising:
a beater cylinder (25) between the threshing cylinder (22) and the separating cylinder (26); and
a beater grate positioned beneath the beater cylinder, wherein the beater cylinder has an axis of rotation perpendicular to the flow direction for generating a tangential flow.

3. The grain separating system of claim 1 or 2, wherein the fingers (84) are pivotable, such that a spacing between trailing ends of the fingers and the separating cylinder (26) is adjustable.

4. The grain separating system of any one of claims 1 to 3, wherein the finger grate comprises:
a set of rows (R1, R2, R3, ...) of fingers, the rows extending perpendicular to the flow direction (M),
wherein the fingers of each row are connected together at a leading end and separate at a trailing end, wherein a rotation of the separating cylinder is in the direction from the leading end to the trailing end.

5. The grain separating system of claim 4, wherein each row of fingers is pivotable as a single unit.

6. The grain separating system of claim 5, wherein all of the rows of fingers are pivotable in unison as a single pivot control function.

7. A grain processing system, comprising:
the grain separating system of any one of claims 1 to 6; and
a straw walker system for receiving the remaining material of the crop stream from the grain separating system.

8. The grain processing system of claim claim 7, further comprising a straw walker system for receiving the remaining material of the crop stream and advancing the remaining material in the flow direction.

9. The grain processing system of claim 8, wherein the grain cleaning system comprises:
a grain pan or sieve (54);
a return pan (44);
a stratification pan (42) for receiving the harvested crop material from a front end of the return pan (44);
a fan (52); and
a sieve arrangement (54,56) for receiving the harvested crop material from a rear end of the stratification pan.

10. The grain processing system of claim 9, wherein the sieve arrangement comprises:
a chaffer sieve (54) for conveying harvested crop material in a generally rearward direction; and
a lower sieve (56),
wherein the grain cleaning system comprises a clean grain chute (70) below the lower sieve.

11. A combine harvester comprising:
a crop cutting head; and
the grain processing system of any one of claims 7 to 10.

12. The combine harvester of claim 11, wherein the wherein the fingers of the finger grate are pivotable, the combine harvester further comprising:
a loss sensor for sensing crop loss;
a controller for controlling the pivoting of the fingers in dependence on the crop loss.
